# EUROPÄISCHE PATENTANMELDUNG

(11) **EP 3 021 003 A1**
(43) Veröffentlichungstag der Anmeldung: **18.05.2016**
(21) Anmeldenummer: 14192966.1
(22) Anmeldetag: 13.11.2014
(51) Int. Cl.: F16H 1/28, F16H 57/033

(54) **Planetengetriebebaureihe**

(71) Anmelder: Siemens Aktiengesellschaft, 80333 München (DE)
(72) Erfinder: Kiesenbauer, Jens, 09322 Penig (DE); Schade, Robert, 04680 Colditz (DE)

(57) **Zusammenfassung**

Die Erfindung betrifft eine Planetengetriebebaureihe zur Herstellung von Planetengetriebevarianten, die eine Planetenstufe als Abtriebsstufe aufweisen, umfassend zumindest ein erstes Planetengetriebe (A) kleinerer Baugröße, das wahlweise mit einer kleineren oder mit einer größeren Umlaufübersetzung der Abtriebsstufe (i_{Abtrieb,} klein, i_{Abtrieb, groß}) ausgestattet werden kann, und ein zweites Planetengetriebe (B) nächst größerer Baugröße, das wahlweise mit einer kleineren oder mit einer größeren Umlaufübersetzung der Abtriebsstufe (i_{Abtrieb, klein}, i_{Abtrieb, groß}) ausgestattet werden kann, wobei jede Abtriebsstufe ein Sonnenrad (1), an einem Planetenträger (4) gehaltene Planetenräder (2) und ein mit einer Innenverzahnung versehenes Hohlrad (3) aufweist. Die Planetengetriebe (A) und (B), welche die Abtriebsstufen bilden, sind dabei derart ausgelegt, dass sich die Planetengetriebevarianten mit nur wenigen Bauteilen bei gleichmäßiger Auslastung der Eingangsstufen realisieren lassen.

## Beschreibung

Die vorliegende Erfindung betrifft eine Planetengetriebebaureihe zur Herstellung von Planetengetriebevarianten, die eine Planetenstufe als Abtriebsstufe aufweisen, umfassend zumindest ein erstes Planetengetriebe kleinerer Baugröße, das wahlweise mit einer kleineren oder mit einer größeren Umlaufübersetzung der Abtriebsstufe ausgestattet werden kann, und ein zweites Planetengetriebe nächst größerer Baugröße, das wahlweise mit einer kleineren oder mit einer größeren Umlaufübersetzung der Abtriebsstufe ausgestattet werden kann, wobei jede Abtriebsstufe ein Sonnenrad, an einem Planetenträger gehaltene Planetenräder und ein mit einer Innenverzahnung versehenes Hohlrad aufweist.

Bei Planetenstufen von Planetengetrieben wird eine hohe Leistungsdichte durch eine Leistungsverzweigung auf mehrere Planetenräder erreicht. Eine Planetenstufe besteht dabei aus einem Sonnenrad, mehreren an einem Planetenträger gehaltenen Planetenrädern und einem eine Innenverzahnung aufweisenden Hohlrad, welche die Verzahnteile der Stufe darstellen. Die Planetenräder sind dabei über den Planetenträger als Drehmoment übertragendes Strukturbauteil verbunden.

Die Verzahnteile einer Planetenstufe bilden eine definierte Übersetzung. Die Variation der Übersetzung bedingt auch die Variation der Verzahnteile und des Planetenträgers.

Ein Planetengetriebe kann grundsätzlich mehrere Planetenstufen und gegebenenfalls andere Getriebestufen aufweisen, wie beispielsweise Kegelrad- oder Stirnradstufen. Zur Erzeugung einer Baureihe mit mehreren nach Abtriebsdrehmoment gestuften Baugrößen werden häufig unter Beibehaltung der Übersetzung der Abtriebsstufe die Sonnenräder und Planetenräder, das Hohlrad sowie die Planetenträger bezüglich ihrer geometrischen Abmessungen variiert. Bei den Zahnrädern werden insbesondere Zähnezahl, Modul, Verzahnungsbreite und Verzahnungsdurchmesser verändert, bei dem Planetenträger der Achsabstand. Dies führt allerdings zu einer hohen Anzahl verschiedener Sonnenräder, Planetenräder und Planetenträger, nämlich zu mindestens einer Variante je Baugröße und Übersetzung einer Stufe, was hinsichtlich der Kosten nicht wünschenswert ist. Die Variation erfolgt meist bei der Abtriebsstufe, welche durch den hohen Kostenanteil am Getriebe nur so groß wie nötig dimensioniert wird und hierdurch häufig drehmomentbestimmend ist. Zur Vermeidung von Überdimensionierungen sollten dabei die Eingangs- und ggf. Zwischenstufen der Planetengetriebe eine möglichst gleichmäßige Auslastung erfahren. Häufig werden in zwei benachbarten Baugrößen einer Planetengetriebebaureihe, so genannten Schwesterbaugrößen, gleiche Eingangsstufen verwendet, welche durch die dann gleich bleibende Übersetzung in der Abtriebsstufe nur in der jeweils größeren Baugröße gut ausgelastet sein können, was eine Überdimensionierung dieser Eingangsstufen in der kleineren Baugröße zur Folge hat.

Ausgehend von diesem Stand der Technik ist es eine Aufgabe der vorliegenden Erfindung, eine Planetengetriebebaureihe der eingangs genannten Art mit alternativem Aufbau zu schaffen.

Zur Lösung dieser Aufgabe schafft die vorliegende Erfindung eine Planetengetriebebaureihe der eingangs genannten Art, die dadurch gekennzeichnet ist, dass das Verhältnis von größerer Umlaufübersetzung der Abtriebsstufe des Planetengetriebes größerer Baugröße und größerer Umlaufübersetzung der Abtriebsstufe des Planetengetriebes kleinerer Baugröße im Wesentlichen dem Verhältnis von Nenn-Abtriebsdrehmoment des Planetengetriebes größerer Baugröße und Nenn-Abtriebsdrehmoment des Planetengetriebes kleinerer Baugröße entspricht, und dass das Verhältnis von kleinerer Umlaufübersetzung der Abtriebsstufe des Planetengetriebes größerer Baugröße und kleinerer Umlaufübersetzung der Abtriebsstufe des Planetengetriebes kleinerer Baugröße im Wesentlichen dem Verhältnis von Nenn-Abtriebsdrehmoment des Planetengetriebes größerer Baugröße und Nenn-Abtriebsdrehmoment des Planetengetriebes kleinerer Baugröße entspricht. Dank dieses Aufbaus der erfindungsgemäßen Planetengetriebebaureihe wird ein dem Stufensprung zwischen den Baugrößen entsprechender Übersetzungsanstieg realisiert, was zu einer ausgewogenen Auslastung eventueller Eingangsstufen und Mittelstufen der Schwesterbaugrößen zur Folge hat. Auf diese Weise kann eine Kostenreduzierung durch kleiner dimensionierte Bauteile erzielt werden.

Gemäß einer Ausgestaltung der vorliegenden Erfindung liegt die Differenz zwischen im Wesentlichen einander entsprechenden Verhältnissen im Bereich von ± 0,12, insbesondere im Bereich von ± 0,10, besser noch im Bereich von ± 0,08, noch besser im Bereich von ± 0,05.

Zur Lösung der eingangs genannten Aufgabe schafft die vorliegende Erfindung ferner eine Planetengetriebebaureihe der eingangs genannten Art, insbesondere der zuvor beschriebenen erfindungsgemäßen Art, die dadurch gekennzeichnet ist, dass
- innerhalb einer Baugröße eines Planetengetriebes für beide Umlaufübersetzungen der Abtriebsstufe identische Hohlräder verwendet werden,
- in der kleineren Umlaufübersetzung der Abtriebsstufe des Planetengetriebes kleinerer Baugröße und in der kleineren Umlaufübersetzung der Abtriebsstufe des Planetengetriebes größerer Baugröße identische Sonnenräder verwendet werden, und
- in der größeren Umlaufübersetzung der Abtriebsstufe des Planetengetriebes kleinerer Baugröße und in der größeren Umlaufübersetzung der Abtriebsstufe des Planetengetriebes größerer Baugröße identische Sonnenräder verwendet werden.

Eine solche Mehrfachverwendung von Verzahnteilen der Abtriebsstufen der Planetengetriebe beider Baugrößen führt zu einer deutlichen Reduzierung der Teilevielfalt, was mit einer Kostenoptimierung einhergeht.

Gemäß einer Ausgestaltung der vorliegenden Erfindung werden in der kleineren Umlaufübersetzung der Abtriebsstufe des Planetengetriebes größerer Baugröße und in der größeren Umlaufübersetzung der Abtriebsstufe des Planetengetriebes kleinerer Baugröße identische Planetenräder verwendet. Auf diese Weise kann die Teilevielfalt weiter verringert werden.

Gemäß einer weiteren Ausgestaltung der vorliegenden Erfindung werden in der kleineren Umlaufübersetzung der Abtriebsstufe des Planetengetriebes kleinerer Baugröße und der größeren Umlaufübersetzung der Abtriebsstufe des Planetengetriebes größerer Baugröße identische Planetenträger oder unterschiedliche Planetenträger mit gleichem Achsabschnitt verwendet, was ebenfalls mit einer weiteren Reduzierung der Teilevielfalt einhergeht.

Zur Lösung der eingangs genannten Aufgabe schafft die vorliegende Erfindung ferner eine Planetengetriebebaureihe zur Herstellung von Planetengetriebevarianten, die eine Planetenstufe als Abtriebsstufe aufweisen, umfassend zumindest ein erstes Planetengetriebe kleinerer Baugröße, das wahlweise mit einer kleineren oder mit einer größeren Umlaufübersetzung der Abtriebsstufe ausgestattet werden kann, und ein zweites Planetengetriebe nächst größerer Baugröße, das wahlweise mit einer kleineren oder mit einer größeren Umlaufübersetzung der Abtriebsstufe ausgestattet werden kann, wobei jede Abtriebsstufe ein Sonnenrad, an einem Planetenträger gehaltene Planetenräder und ein mit einer Innenverzahnung versehenes Hohlrad aufweist, insbesondere eine Planetengetriebebaureihe der zuvor definierten Art, dadurch gekennzeichnet, dass zur Herstellung der einzelnen Planetengetriebevarianten Sonnenräder mit Zähnezahlen von 17 und 25, Planetenräder mit Zähnezahlen von 23, 27 und 31 und Hohlräder mit Zähnezahlen von 71 und 79 vorgesehen sind. Diese Zähnezahlen sind deshalb so vorteilhaft, dass sie sich bei keiner der Kombinationen ein gemeinsamer ganzzahliger Teiler finden lässt bzw. kein ganzzahliges Zähnezahlverhältnis ergibt. Ganzzahlige Teiler können im Betrieb zu ungewollten Schwingungsanregungen und ggf. zu einer störenden Geräuschbildung führen, was nicht wünschenswert ist.

Bevorzugt sind die Planetenträger unterschiedlicher Achsabstände aus identischen Rohteilen gefertigt. Dies führt zu einer weiteren Reduzierung der Teilevielfalt, was ebenfalls bezogen auf die Kosten von Vorteil ist.

Gemäß einer Ausgestaltung der vorliegenden Erfindung weisen die Abtriebsstufen der Planetengetriebe beider Baugrößen identische Vorstufen auf. Auch dies geht mit einer Optimierung der Teilevielfalt einher.

Weitere Merkmale und Vorteile der vorliegenden Erfindung werden anhand der nachfolgenden Beschreibung einer Planetengetriebebaureihe gemäß einer Ausführungsform der vorliegenden Erfindung unter Bezugnahme auf die beiliegende Zeichnung deutlich. Darin ist
- FIG 1: eine schematische Schnittansicht, die zwei Schwestergetriebe unterschiedlicher Baugröße einer erfindungsgemäßen Planetengetriebebaureihe zeigt;
- FIG 2: ein Diagramm, das vier Varianten der erfindungsgemäßen Planetengetriebebaureihe zeigt;
- FIG 3: eine Tabelle, die einen Baukasten für Verzahn- und Strukturbauteile der erfindungsgemäßen Planetengetriebebaureihe zeigt; und
- FIG 4: eine schematische Ansicht, die verschiedene Planetenträger der erfindungsgemäßen Planetengetriebebaureihe zeigt, die aus einem einzelnen Rohgussteil gefertigt werden.

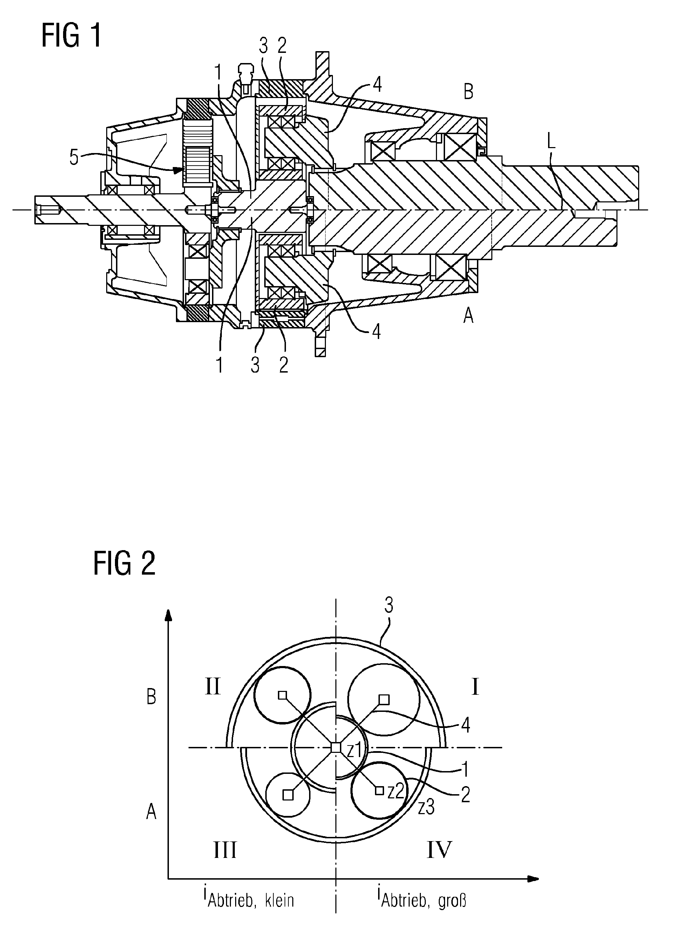

FIG 1 zeigt zwei Planetengetriebe A und B einer Planetengetriebebaureihe gemäß einer Ausführungsform der vorliegenden Erfindung, bei der es sich um so genannte Schwesterbaugrößen handelt. Das Planetengetriebe A kleinerer Baugröße, das vorliegend ein Nenn-Abtriebsdrehmoment T_{Abtrieb, A} von 38KNm aufweist, ist unterhalb der Längsachse L dargestellt, während das Planetengetriebe B größerer Baugröße, das vorliegend ein Nenn-Abtriebsdrehmoment T_{Abtrieb, B} von 45KNm aufweist, oberhalb der Längsachse L gezeigt ist. Beide Planetengetriebe weisen als Abtriebsstufe eine Planetenstufe auf, die ein Sonnenrad 1, mehrere Planetenräder 2 und ein mit einer Innenverzahnung versehenes Hohlrad 3 aufweist, wobei die Planetenräder 2 an einem Planetenträger 4 gehalten sind. Ferner umfasst jedes Planetengetriebe A und B eine Vorstufe 5, die bei beiden Baugrößen identisch, vorliegend ebenfalls als Planetenstufe ausgebildet ist. Alternativ können für die Planetengetriebe A und B beider Baugrößen aber auch identisch ausgebildete Kegel- oder Stirnradstufen zum Einsatz kommen, auch wenn dies vorliegend nicht dargestellt ist. Grundsätzlich ist es auch möglich, die Vorstufe 5 beider Baugrößen unterschiedlich zu gestalten, auch wenn dies als nachteilig angesehen wird.

Das Planetengetriebe A kleinerer Baugröße ebenso wie das Planetengetriebe B größerer Baugröße können bei der Planetengetriebebaureihe jeweils wahlweise mit einer kleineren Umlaufübersetzung der Abtriebsstufe i_{Abtrieb, klein} oder mit einer größeren Umlaufübersetzung der Abtriebsstufe i_{Abtrieb, groß} ausgestattet werden. Die für die jeweiligen Planetengetriebevarianten erforderlichen Verzahn- und Strukturbauteile, welche einen Bausatz bilden, sind in Form eines Diagrammes in Figur 2 dargestellt. Für die Planetengetriebe A oder B einer Baugröße werden für beide Umlaufübersetzung der Abtriebsstufe i_{Abtrieb, klein} und i_{Abtrieb, groß} identische Hohlräder 3 verwendet, siehe hierzu die Quadranten I und II bzw. III und IV. In der kleineren Umlaufübersetzung der Abtriebsstufe i_{Abtrieb, klein} des Planetengetriebes B größerer Baugröße und in der größeren Umlaufübersetzung der Abtriebsstufe i_{Abtrieb, groß} des Planetengetriebes A kleinerer Baugröße werden identische Planetenräder 2 eingesetzt, siehe hierzu die Quadranten II und IV. In der kleineren Umlaufübersetzung der Abtriebsstufe Abtrieb, klein des Planetengetriebes A kleinerer Baugröße und in der kleineren Umlaufübersetzung der Abtriebsstufe i_{Abtrieb, klein} des Planetengetriebes B größerer Baugröße kommen identische Sonnenräder 1 zum Einsatz, siehe hierzu die Quadranten III und II. Ebenso kommen in der größeren Umlaufübersetzung der Abtriebsstufe i_{Abtrieb, groß} des Planetengetriebes A kleinerer Baugröße und in der größeren Umlaufübersetzung der Abtriebsstufe i_{Abtrieb, groß} des Planetengetriebes B größerer Baugröße identische Sonnenräder 1 zum Einsatz, siehe hierzu die Quadranten IV und I. Ferner werden in der kleineren Umlaufübersetzung der Abtriebsstufe i_{Abtrieb, klein} des Planetengetriebes A kleinerer Baugröße und der größeren Umlaufübersetzung der Abtriebsstufe i_{Abtrieb, groß} des Planetengetriebes B größerer Baugröße identische Planetenträger 4 verwendet, siehe die Quadranten IV und I. Alternativ können unterschiedliche Planetenträger mit gleichen Achsabständen verwendet werden, auch wenn dies vorliegend nicht dargestellt ist.

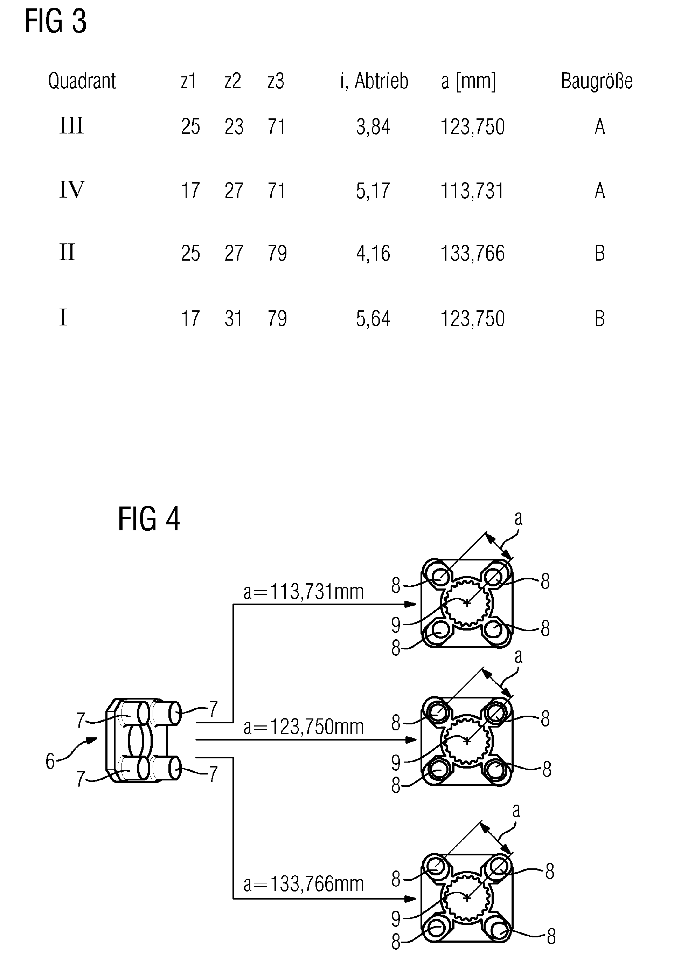

Die Tabelle gemäß Figur 3 zeigt ein Beispiel einer konkreten Ausgestaltung der Sonnenräder 1, der Planetenräder 2, der Hohlräder 3 und der Planetenträger 4 einer Abtriebsstufe der erfindungsgemäßen Planetengetriebebaureihe.

Im Quadranten III, der das Planetengetriebe A kleinerer Baugröße mit kleiner Umlaufübersetzung der Abtriebsstufe repräsentiert weist das Sonnenrad 1 eine Zähnezahl z₁ = 25, das Planetenrad 2 eine Zähnezahl z₂ = 23 und das Hohlrad 3 eine Zähnezahl z₃ = 71 auf. Die Umlaufübersetzung der Abtriebsstufe i_{Abtrieb, klein} beträgt 3,84 und der Achsabstand a des Planetenträgers 4 beträgt 123,750 mm.

Im Quadranten IV, der das Planetengetriebe A kleinerer Baugröße mit größerer Umlaufübersetzung der Abtriebsstufe repräsentiert, weist das Sonnenrad 1 eine Zähnezahl z₁ = 17, das Planetenrad 2 eine Zähnezahl z₂ = 27 und das Hohlrad 3 eine Zähnezahl z₃ = 71 auf. Die Umlaufübersetzung der Abtriebsstufe i_{Abtrieb}, _{groß} beträgt 5,17 und der Achsabstand a des Planetenträgers 4 beträgt 113,731 mm.

Im Quadranten II, der das Planetengetriebe B größerer Baugröße mit kleiner Umlaufübersetzung der Abtriebsstufe repräsentiert, weist das Sonnenrad 1 eine Zähnezahl z₁ = 25, das Planetenrad 2 eine Zähnezahl z₂ = 27 und das Hohlrad 3 eine Zähnezahl z₃ = 79 auf. Die Umlaufübersetzung der Abtriebsstufe i_{Abtrieb, klein} beträgt 4, 16 und der Achsabstand a des Planetenträgers 4 beträgt 133,766 mm.

Im Quadranten I, der das Planetengetriebe B größerer Baugröße mit größerer Umlaufübersetzung der Abtriebsstufe repräsentiert, weist das Sonnenrad 1 eine Zähnezahl z₁ = 17, das Planetenrad 2 eine Zähnezahl z₂ = 31 und das Hohlrad 3 eine Zähnezahl z₃ = 79 auf. Die Umlaufübersetzung der Abtriebswelle i_{Abtrieb, groß} beträgt 5,64 und der Achsabstand a des Planetenträgers 4 beträgt 123,750 mm.

Das Verhältnis von größerer Umlaufübersetzung der Abtriebsstufe i_{Abtrieb, groß} des Planetengetriebes B größerer Baugröße und größerer Umlaufübersetzung der Abtriebsstufe i_{Abtrieb, groß} des Planetengetriebes kleinerer Baugröße A beträgt vorliegend etwa 1,09 (5,64:5,17) und entspricht im Wesentlichen dem Verhältnis von Nenn-Abtriebsdrehmoment T_{Abtrieb, B} des Planetengetriebes B größerer Baugröße und Nenn-Abtriebsdrehmoment T_{Abtrieb, A} des Planetengetriebes A kleinerer Baugröße, das 1,18 beträgt (45:38). Die Differenz besagter Verhältnisse ist lediglich 0,09 (1,184-1,091). Ferner entspricht das Verhältnis von kleinerer Umlaufübersetzung der Abtriebsstufe i_{Abtrieb, klein} des Planetengetriebes B größerer Baugröße und kleinerer Umlaufübersetzung der Abtriebsstufe i_{Abtrieb, klein} des Planetengetriebes A kleinerer Baugröße, das vorliegend 1,08 beträgt (4,16:3,84), im Wesentlichen dem Verhältnis von Nenn-Abtriebsdrehmoment T_{Abtrieb, B} des Planetengetriebes B größerer Baugröße und Nenn-Abtriebsdrehmoment T_{Abtrieb, A} des Planetengetriebes A kleinerer Baugröße, also 1,184. Die Differenz besagter Verhältnisse beträgt lediglich 0,10.

Der wesentliche Vorteil, der sich durch eine erfindungsgemäße Planetengetriebebaureihe der zuvor beschriebenen Art ergibt, besteht darin, dass zwei Planetengetriebe A und B benachbarter Baugrößen mit jeweils kleinerer und größerer Umlaufübersetzung der Abtriebsstufe i_{Abtrieb, klein} und i_{Abtrieb, groß} mit nur wenigen Verzahn- und Strukturbauteilen realisiert werden können. Vorliegend lassen sich insgesamt vier Planetengetriebevarianten mit insgesamt nur zwei verschiedenen Sonnenrädern 1, drei verschiedenen Planetenrädern 2, zwei verschiedenen Hohlrädern 3 und drei verschiedenen Planetenträgern 4 erzielen.

An dieser Stelle sei darauf hingewiesen, dass die erfindungsgemäße Planetengetriebebaureihe natürlich auch mehr als zwei Schwesterbaugrößen A und B aufweisen kann.

Figur 4 zeigt beispielhaft ein Rohgussteil 6, das zur Herstellung der Planetenträger 4 mit den unterschiedlichen Achsabständen a von 113,731 mm, 123,750 mm und 133,766 mm dient. Das Rohgussteil 6 weist entsprechend groß dimensionierte Zapfen 7 auf, aus denen sich durch spanende Bearbeitung die Achsen 8 der Planetenträger 4 mit den verschiedenen Achsabständen a zur Mittelachse 9 fertigen lassen, die zur Aufnahme der Planetenräder 2 dienen. Durch die Fertigung von Planetenträgern 4 mit verschiedenen Achsabständen a aus einem einzelnen Rohgussteil 6 lassen sich die Fertigungskosten der erfindungsgemäßen Planetengetriebebaureihe weiter senken.

Die Planetenräder 2 der verschiedenen Übersetzungen i_{Abtrieb, klein} und i_{Abtrieb, groß} können entsprechend der erforderlichen Tragzahl sowohl mit unterschiedlich breiten Wälzlagern als auch mit innen- und oder außenringlosen Wälzlagern ausgeführt sein.

Obwohl die Erfindung im Detail durch das bevorzugte Ausführungsbeispiel näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Planetengetriebebaureihe zur Herstellung von Planetengetriebevarianten, die eine Planetenstufe als Abtriebsstufe aufweisen, umfassend zumindest ein erstes Planetengetriebe (A) kleinerer Baugröße, das wahlweise mit einer kleineren oder mit einer größeren Umlaufübersetzung der Abtriebsstufe (_{iAbtrieb, klein}, i_{Abtrieb, groß}) ausgestattet werden kann, und ein zweites Planetengetriebe (B) nächst größerer Baugröße, das wahlweise mit einer kleineren oder mit einer größeren Umlaufübersetzung der Abtriebsstufe (i_{Abtrieb, klein}, i_{Abtrieb, groß}) ausgestattet werden kann, wobei jede Abtriebsstufe ein Sonnenrad (1), an einem Planetenträger (4) gehaltene Planetenräder (2) und ein mit einer Innenverzahnung versehenes Hohlrad (3) aufweist,
**dadurch gekennzeichnet, dass** das Verhältnis von größerer Umlaufübersetzung der Abtriebsstufe (i_{Abtrieb, groß}) des Planetengetriebes (B) größerer Baugröße und größerer Umlaufübersetzung der Abtriebsstufe (i_{Abtrieb, groß}) des Planetengetriebes kleinerer Baugröße (A) im Wesentlichen dem Verhältnis von Nenn-Abtriebsdrehmoment des Planetengetriebes (B) größerer Baugröße und Nenn-Abtriebsdrehmoment des Planetengetriebes (A) kleinerer Baugröße entspricht, und dass das Verhältnis von kleinerer Umlaufübersetzung der Abtriebsstufe (i_{Abtrieb, klein}) des Planetengetriebes (B) größerer Baugröße und kleinerer Umlaufübersetzung der Abtriebsstufe (i_{Abtrieb, klein}) des Planetengetriebes (A) kleinerer Baugröße im Wesentlichen dem Verhältnis von Nenn-Abtriebsdrehmoment des Planetengetriebes (B) größerer Baugröße und Nenn-Abtriebsdrehmoment des Planetengetriebes (A) kleinerer Baugröße entspricht.

2. Planetengetriebe nach Anspruch 1,
**dadurch gekennzeichnet, dass** die Differenz zwischen im Wesentlichen einander entsprechenden Verhältnissen im Bereich von ± 0,12 liegt, insbesondere im Bereich von ± 0,10, besser noch im Bereich von ± 0,08, noch besser im Bereich von ±0,05.

3. Planetengetriebebaureihe zur Herstellung von Planetengetriebevarianten, die eine Planetenstufe als Abtriebsstufe aufweisen, umfassend zumindest ein erstes Planetengetriebe (A) kleinerer Baugröße, das wahlweise mit einer kleineren oder mit einer größeren Umlaufübersetzung der Abtriebsstufe (i_{Abtrieb, klein}, i_{Abtrieb, groß}) ausgestattet werden kann, und ein zweites Planetengetriebe (B) nächst größerer Baugröße, das wahlweise mit einer kleineren oder mit einer größeren Umlaufübersetzung der Abtriebsstufe (i_{Abtrieb, klein}, i_{Abtrieb, groß}) ausgestattet werden kann, wobei jede Abtriebsstufe ein Sonnenrad (1), an einem Planetenträger (4) gehaltene Planetenräder (2) und ein mit einer Innenverzahnung versehenes Hohlrad (3) aufweist, insbesondere Planetengetriebebaureihe nach Anspruch 1 oder 2,
**dadurch gekennzeichnet, dass**
- innerhalb einer Baugröße eines Planetengetriebes (A; B) für beide Umlaufübersetzungen der Abtriebsstufe (i_{Abtrieb, klein}, i_{Abtrieb, groß}) identische Hohlräder (3) verwendet werden,
- in der kleineren Umlaufübersetzung der Abtriebsstufe (i_{Abtrieb, klein}) des Planetengetriebes (A) kleinerer Baugröße und in der kleineren Umlaufübersetzung der Abtriebsstufe (i_{Abtrieb, klein}) des Planetengetriebes (B) größerer Baugröße identische Sonnenräder (1) verwendet werden, und
- in der größeren Umlaufübersetzung der Abtriebsstufe (i_{Abtrieb, groß}) des Planetengetriebes (A) kleinerer Baugröße und in der größeren Umlaufübersetzung der Abtriebsstufe (i_{Abtrieb, groß}) des Planetengetriebes (B) größerer Baugröße identische Sonnenräder (1) verwendet werden.

4. Planetengetriebebaureihe nach Anspruch 3,
**dadurch gekennzeichnet, dass** in der kleineren Umlaufübersetzung der Abtriebsstufe (i_{Abtrieb, klein}) des Planetengetriebes (B) größerer Baugröße und in der größeren Umlaufübersetzung der Abtriebsstufe (i_{Abtrieb, groß}) des Planetengetriebes (A) kleinerer Baugröße identische Planetenräder (2) verwendet werden,

5. Planetengetriebebaureihe nach Anspruch 3 oder 4,
**dadurch gekennzeichnet, dass** in der kleineren Umlaufübersetzung der Abtriebsstufe (i_{Abtrieb, klein}) des Planetengetriebes (A) kleinerer Baugröße und der größeren Umlaufübersetzung der Abtriebsstufe (i_{Abtrieb, groß}) des Planetengetriebes (B) größerer Baugröße identische Planetenträger (4) verwendet werden.

6. Planetengetriebebaureihe zur Herstellung von Planetengetriebevarianten, die eine Planetenstufe als Abtriebsstufe aufweisen, umfassend zumindest ein erstes Planetengetriebe (A) kleinerer Baugröße, das wahlweise mit einer kleineren oder mit einer größeren Umlaufübersetzung der Abtriebsstufe (i_{Abtrieb, klein}, i_{Abtrieb, groß}) ausgestattet werden kann, und ein zweites Planetengetriebe (B) nächst größerer Baugröße, das wahlweise mit einer kleineren oder mit einer größeren Umlaufübersetzung der Abtriebsstufe (i_{Abtrieb, klein}, i_{Abtrieb, groß}) ausgestattet werden kann, wobei jede Abtriebsstufe ein Sonnenrad (1), an einem Planetenträger (4) gehaltene Planetenräder (2) und ein mit einer Innenverzahnung versehenes Hohlrad (3) aufweist, insbesondere Planetengetriebebaureihe nach einem der vorhergehenden Ansprüche,
**dadurch gekennzeichnet, dass** zur Herstellung der einzelnen Planetengetriebevarianten Sonnenräder (1) mit Zähnezahlen (z₁) von 17 und 25, Planetenräder (2) mit Zähnezahlen (z₂) von 23, 27 und 31 und Hohlräder (3) mit Zähnezahlen (z₃) von 71 und 79 vorgesehen sind.

7. Planetengetriebebaureihe nach einem der vorhergehenden Ansprüche,
**dadurch gekennzeichnet, dass** die Planetenträger (4) unterschiedlicher Achsabstände (a) aus identischen Rohteilen (6) gefertigt sind.

8. Planetengetriebebaureihe nach einem der vorhergehenden Ansprüche, **dadurch gekennzeichnet, dass** die Abtriebsstufen der Planetengetriebe (A, B) beider Baugrößen identische Vorstufen aufweisen.
